(19) **Europäisches Patentamt**
**European Patent Office**
**Office européen des brevets**

(11) **EP 4 111 146 B1**

(12) # EUROPEAN PATENT SPECIFICATION

(45) Date of publication and mention
of the grant of the patent:
**15.11.2023 Bulletin 2023/46**

(51) International Patent Classification (IPC):
**G01H 3/12** *(2006.01)*     **G01V 1/00** *(2006.01)*
**G08C 23/02** *(2006.01)*     **H05B 47/12** *(2020.01)*

(21) Application number: **21704821.4**

(22) Date of filing: **17.02.2021**

(52) Cooperative Patent Classification (CPC):
**G08C 23/02; G01H 3/125; G01V 1/001;**
**H05B 47/12;** Y02B 20/40

(86) International application number:
**PCT/EP2021/053820**

(87) International publication number:
**WO 2021/170458 (02.09.2021 Gazette 2021/35)**

(54) **SELECTION CRITERIA FOR PASSIVE SOUND SENSING IN A LIGHTING IOT NETWORK**

AUSWAHLKRITERIEN FÜR PASSIVE SCHALLERFASSUNG IN EINEM
BELEUCHTUNGS-IOT-NETZWERK

SÉLECTION DE CRITÈRES DE DÉTECTION SONORE PASSIVE DANS UN RÉSEAU IOT
D'ÉCLAIRAGE

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **24.02.2020 US 202062980472 P**
**26.08.2020 US 202063070651 P**
**07.09.2020 EP 20194802**

(43) Date of publication of application:
**04.01.2023 Bulletin 2023/01**

(73) Proprietor: **Signify Holding B.V.**
**5656 AE Eindhoven (NL)**

(72) Inventors:
• **YU, Jin**
**5656 AE Eindhoven (NL)**
• **DEIXLER, Peter**
**5656 AE Eindhoven (NL)**

(74) Representative: **Verweij, Petronella Daniëlle**
**Signify Netherlands B.V.**
**Intellectual Property**
**High Tech Campus 7**
**5656 AE Eindhoven (NL)**

(56) References cited:
**US-A1- 2017 299 425     US-A1- 2019 214 019**

**Description**

FIELD OF THE DISCLOSURE

The present disclosure is directed generally to determining selection criteria for passive sound sensing in a lighting Internet of Things (IoT) system for evaluating characteristics of a building space, such as occupancy detection and/or people counting in a room.

BACKGROUND

Connected lighting luminaires with sensor bundles have been developed and integrated into Internet of Things (IoT) systems. These sensor bundles may have embedded microphones, thermopile sensors, temperature sensors, relative humidity sensors, and additional sensors. The connected lighting luminaires may further include embedded speakers. These systems may use synchronized microphones and speakers of the same luminaire to transmit and receive an audio signal to determine building space occupancy. Modern commercial spaces often include connected speakers arranged independently from the luminaires. In fact, some office spaces may have dozens of connected lighting luminaires (each with an embedded microphone) and several connected speakers. Attempting to evaluate characteristics, such as occupancy or people count, for a portion of the building space utilizing every microphone and speaker would be highly inefficient, and could overwhelm the limited computational capacity of the connected lighting luminaires. Accordingly, it would be computationally advantageous to determine a subset of the independent microphones and speakers corresponding to a portion of a building space, and utilize this subset to evaluate characteristics of this portion of the building space. US 2017/299425 A1 discloses a smart home system. The presence of a person in a room may be detected. Thereto, in the room there is a speaker generating sound which is received by a microphone.

A channel can be considered to be present between speaker and microphone with multipath components. There is a training mode wherein the sound received by the microphone, being representative for an empty room, is stored. In the detection mode, sound is generated by the speaker and picked up by the microphone. In case of the presence of a person said picked up sound is different due to the influence of the person on the multipath components. The presence detection system compares received sound by microphone to empty room sound. If the difference is over a threshold, presence of a person is detected and for example the lighting may be adjusted.

SUMMARY OF THE DISCLOSURE

The invention is defined in the appended claims.

The present disclosure is directed generally to a connected lighting system configured to select independent microphones and speakers to efficiently evaluate one or more characteristics of a selected portion of a building space, such as a portion of a room. These characteristics may include occupancy status (occupied or unoccupied), people count, fall detection, breathing detection, and more. The system associates each microphone with one or more areas of the building space during the commissioning process. The system either determines or retrieves a baseline channel matrix representative of the strength of the audio multipath transmission channel between each pair of microphone and speaker when the building space is in baseline condition. Based on the selected portion of the building space, the baseline channel matrix, and the commissioning process, the system then selects the combinations of microphones and speakers to most efficiently evaluate the characteristics. The system then utilizes the selected speakers to transmit audio signals, and generates a characteristic channel response matrix based on the audio samples received by the selected microphones. The system then analyzes the characteristic channel response matrix in light of the baseline channel matrix to determine the characteristic of the selected portion of the building space.

Generally, in one aspect, a system for evaluating a characteristic of a portion of a building space is provided. The system includes a plurality of speakers. According to an example, each of the plurality of speakers may be directional.

The system further includes a plurality of microphones. According to an example, each of the plurality of microphones may be omnidirectional.

The system further includes a plurality of pairs. Each pair includes at least one of the plurality of microphones and at least one of the plurality of speakers. Each pair forms one of a plurality of audio multipath transmission channels. At least one of the plurality of pairs is associated with at least one of the one or more detection areas within the portion of the building space.

The system further includes a controller. The controller is communicatively coupled to each of the plurality of speakers. The controller is also communicatively coupled to each of the plurality of microphones.

The controller is configured to select one or more of the one or more detection areas. According to an example, the system may further include a user interface configured to receive one or more detection area selections from a user.

The controller is further configured to activate one or more of the plurality of microphones to capture one or more audio samples. Each of the activated microphones corresponds to at least one of the pairs associated with one or more of the selected detection areas. The controller is further configured to select one or more of the plurality of speakers based on a baseline channel response matrix and the activated microphones.

The controller is further configured to transmit a command signal to each of the selected speakers. The selected speakers are configured to generate a plurality of audio signals based on the command signal. According to an example, the selected speakers may be configured to sequentially transmit one of the plurality of audio signals. According to a further example, the selected speakers may be configured to simultaneously transmit one of the plurality of audio signals. In this example, the audio signals transmitted simultaneously are orthogonal. According to a further example, each of the plurality of audio signals may have a frequency greater than or equal to 16 kHz.

The controller is further configured to determine a characteristic channel response matrix based on the audio samples and the audio signals.

The controller is further configured to evaluate the characteristic of the portion of the building space based on the characteristic channel response matrix and the baseline channel response matrix.

The baseline channel response matrix represents an audio transmission channel between the one or more of the plurality of microphones and the one or more of the plurality of speakers of the portion of the building space.

According to an example, the system may further include a plurality of luminaires. Each luminaire may include one or more of the plurality of microphones. In a further example, each of the plurality of speakers may be arranged in the building space apart from the plurality of luminaires.

According to an example, the controller may be further configured to determine the baseline channel response matrix by: (1) activating each of the plurality of microphones to capture one or more baseline audio samples; (2) transmitting a baseline command signals to each of the plurality of speakers while the building space is in baseline condition, wherein each of the speakers are configured to generate a plurality of baseline audio signals based on the baseline command signal; and (3) calculating the baseline channel response matrix based on the baseline audio signals and the baseline audio samples.

According to an example, the system may further include a commissioning subsystem. The commissioning subsystem may be configured to associate one or more of the plurality of pairs with one or more the one or more detection areas.

According to another aspect, a method for evaluating a characteristic of a portion of a building space is provided. The method includes selecting one or more of one or more detection areas. The one or more detection areas are within the portion of the building space.

The method further includes activating one or more of a plurality of microphones to capture one or more audio samples. Each of the activated microphones corresponds to at least one of a plurality of pairs associated with one or more of the selected detection areas. Each pair includes at least one of the plurality of microphones and at least one of a plurality of speakers. Each pair forms one of a plurality of audio multipath transmission channels.

The method further includes selecting one or more of the plurality of speakers based on a baseline channel response matrix and the activated microphones. The method further includes transmitting, via each of the selected speakers, one of a plurality of audio signals. The method further includes determining a characteristic channel response matrix based on the audio samples and the audio signals. The method further includes evaluating the characteristic of the portion of the building space based on the characteristic channel response matrix and the baseline channel response matrix.

According to an example, the method may further include activating each of the plurality of microphones to capture one or more baseline audio samples. The method may further include transmitting, via each of the plurality of speakers, one of a plurality of baseline audio signals while the building space is in baseline condition. The method may further include calculating the baseline channel response matrix based on the baseline audio signals and the baseline audio samples.

According to an example, the method may further include associating, via a commissioning subsystem, one or more of the plurality of pairs with one or more of the plurality of detection areas.

In various implementations, a processor or controller may be associated with one or more storage media (generically referred to herein as "memory," e.g., volatile and non-volatile computer memory such as RAM, PROM, EPROM, and EEPROM, floppy disks, compact disks, optical disks, magnetic tape, etc.). In some implementations, the storage media may be encoded with one or more programs that, when executed on one or more processors and/or controllers, perform at least some of the functions discussed herein. Various storage media may be fixed within a processor or controller or may be transportable, such that the one or more programs stored thereon can be loaded into a processor or controller so as to implement various aspects as discussed herein. The terms "program" or "computer program" are used herein in a generic sense to refer to any type of computer code (e.g., software or microcode) that can be employed to program one or more processors or controllers.

These and other aspects of the various embodiments will be apparent from and elucidated with reference to the embodiment(s) described hereinafter.

BRIEF DESCRIPTION OF THE DRAWINGS

In the drawings, like reference characters generally refer to the same parts throughout the different views. Also, the drawings are not necessarily to scale, emphasis instead generally being placed upon illustrating the principles of the various embodiments.

FIG. 1 is a schematic of a system for evaluating a characteristic of a portion of a building space, in accordance with an example.

FIG. 2 is a further schematic of a system for evaluating a characteristic of a portion of a building space, in accordance with an example.

FIG. 3 is an illustration of a system for evaluating a characteristic of a portion of a building space, in accordance with an example.

FIG. 4 is a graphical tree model showing the relationship between the speakers, desks, and luminaires in a system for evaluating a characteristic of a portion of a building space.

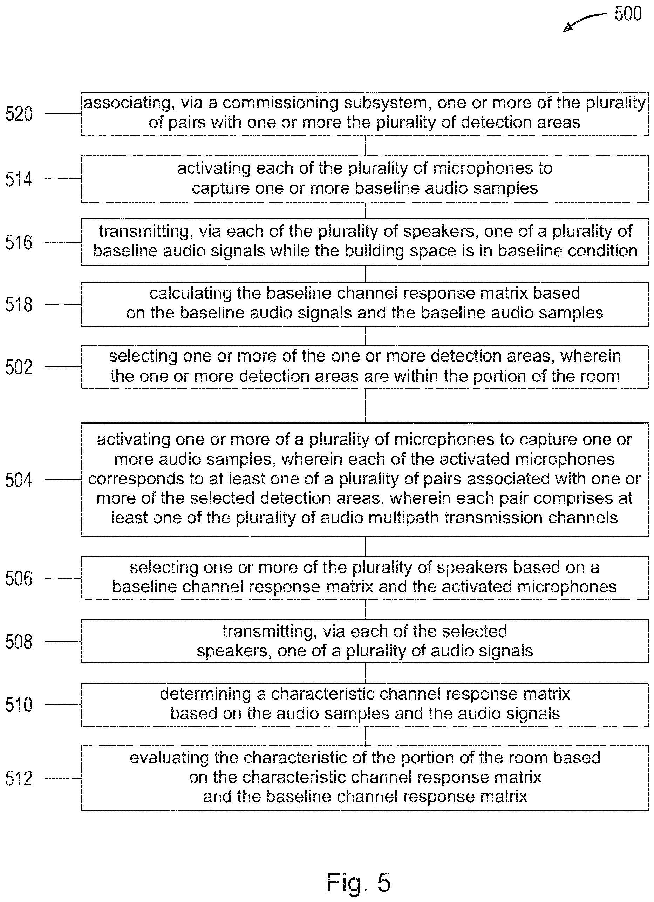

FIG. 5 is a flowchart of a method for evaluating a characteristic of a portion of a building space, in accordance with an example.

DETAILED DESCRIPTION OF EMBODIMENTS

The present disclosure is directed generally to a connected lighting system configured to select independent microphones and speakers to efficiently evaluate one or more characteristics of a selected portion of a building space, such as a portion of a room. These characteristics may include occupancy, people count, fall detection, and more. The system associates each microphone with one or more areas of the building space during the commissioning process. In a preferred example, an area corresponds to a desk in an office space. The system either determines or retrieves a baseline channel matrix representative of the strength of the audio multipath transmission channel between each pair of microphone and speaker when the building space is in baseline condition. In baseline condition, the building space is typically unoccupied and either completely empty, or outfitted with only fixed-position furniture. Based on the selected portion of the building space, the baseline channel matrix, and the commissioning process, the system then selects the combinations of microphones and speakers to most efficiently evaluate the desired characteristics. The system then utilizes the selected speakers to transmit audio signals, and generates a characteristic channel response matrix based on the audio samples captured by the selected microphones. In a preferred example, the speakers transmit a series of audio signals, and the system generates a series of characteristic channel response matrices, over a time interval. In a further preferred example, the speakers simultaneously transmit the audio signals of the series, and the signals are orthogonal to prevent signal interference. The system then analyzes the one or more characteristic channel response matrices in light of the baseline channel matrix to determine the characteristic of the selected portion of the building space.

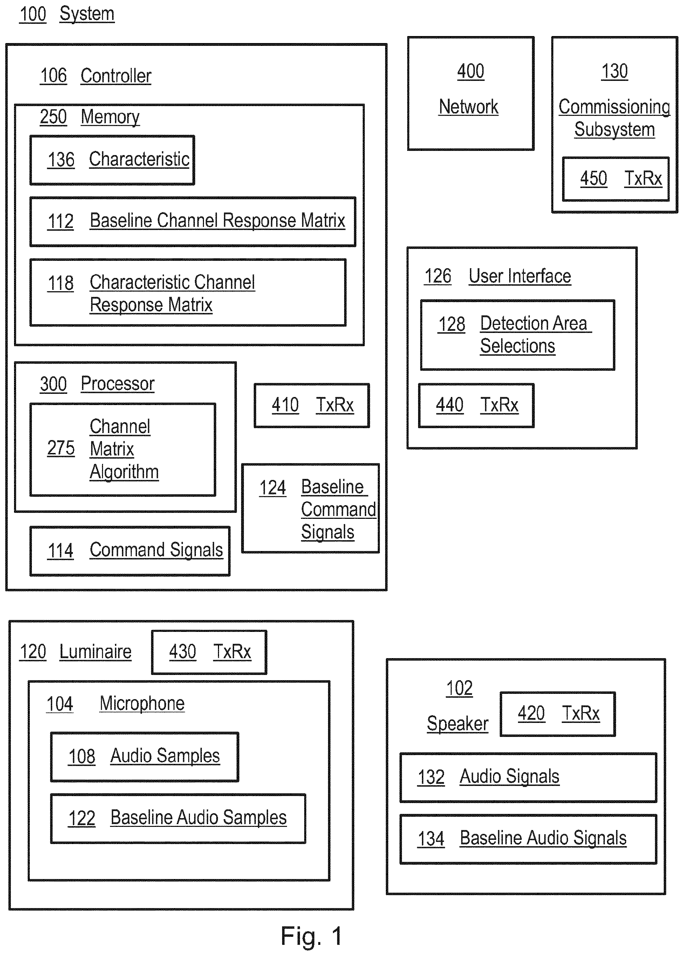

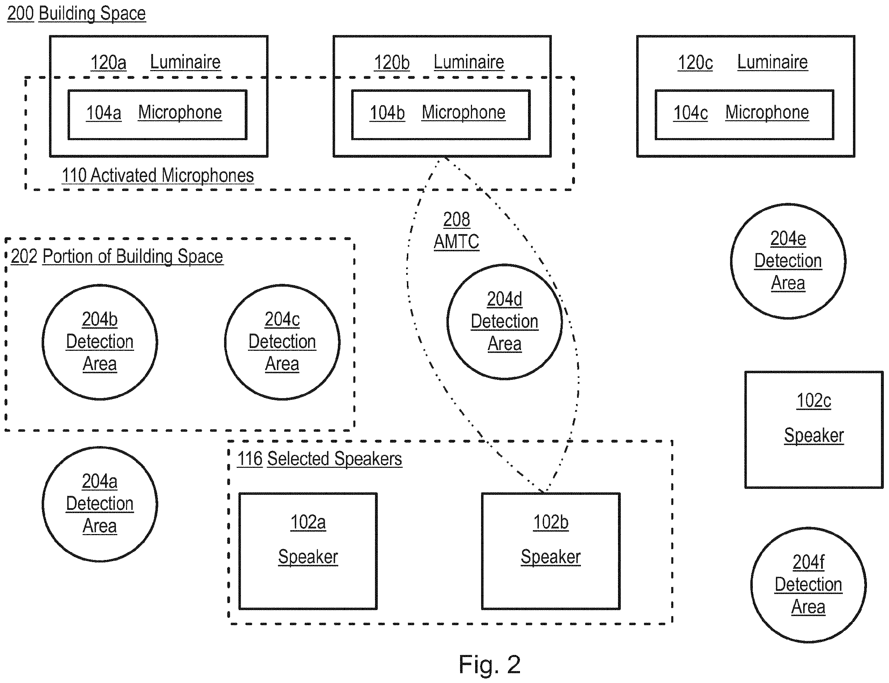

Generally, in one aspect, and with reference to FIGS. 1 and 2, a system 100 for evaluating a characteristic 136 of a portion 202 of a building space 200, such as a room, may be provided. In one example, the characteristic 136 may be whether the portion 202 of the building space 200 is occupied or unoccupied. In another example, the characteristic 136 may be a count of the number of people within the portion 202 of the building space 200. In a further example, the characteristic 136 may be whether or not a person has fallen in the portion 202 of the building space 200. In an even further example, the characteristic 136 may be a measure of vital signs of a person within the portion 202 of the building space 200, such as breathing detection.

The system 100 may include a plurality of speakers 102, a plurality of luminaires 120, each luminaire including a microphone 104, a controller 106, a user interface 126, and a commissioning subsystem 130. Each component of the system 100 may be configured to communicate via wired and/or wireless network 400. A typical system 100 may include three speakers 102 and six microphones 104.

The system 100 includes a plurality of speakers 102. According to an example, each of the plurality of speakers 102 may be directional. Each speaker 102 may include a transceiver 420 to communicate with the other components of the system 100. In an example, one of the speakers 102 may be a smart speaker, such as Amazon's Alexa. Generally speaking, the speakers 102 are configured to utilize one or more electro-acoustic transducers to generate audio signals 132 based on one or a series of command signals 114 generated by the controller 106.

In a further example, the configuration (frequency, amplitude, modulation, etc.) of the audio signals 132 may be stored in a memory associated with the speakers 102. The speakers are triggered to transmit one or more audio signals 132 in the building space 200 upon receiving one or more command signals 114 from the controller 106 via the network 400. In this example, the plurality of speakers 102 may include smart speakers or any other speakers 102 with memory storage capabilities.

The system 100 analyzes the impact of the aspects of the relevant portion 202 of the building space 200 (such as furniture and people) on the audio signals 132 to evaluate the desired characteristics 136.

The system 100 further includes a plurality of microphones 104. According to an example, each of the plurality of microphones 104 may be omnidirectional. When activated by the system 100, the microphones are configured to capture audio samples 108 corresponding to the audio signals 132 transmitted by the speakers 102. The microphones 104 may include one or more acoustic filters corresponding to the different parameters of the audio signals 132, such as frequency or coding.

According to a further example, and as shown in FIGS. 1 and 2, the system 100 may further include a plurality of luminaires 120. Each luminaire 120 may include one or more of the plurality of microphones 104. For example, a luminaire 120 may include a single, discreet microphone 104. Alternatively, a luminaire 120 may include several microphones 104 configured to form a directional microphone array.

Further, each luminaire 120 may include a transceiver 430 to communicate with the other components of the system 100. The luminaires 120 may be part of a broader connected lighting system, which may span multiple building spaces 200 and include dozens of luminaires 120.

In a further example, each of the plurality of speakers 102 may be arranged in the building space 200 apart from the plurality of luminaires 120. Alternatively, one or more of the luminaires 120 may include one or more of the plurality of speakers 102. If a speaker 102 is located in a luminaire 120, the microphones 104 selected to capture the audio signals 132 generated by the speaker 102 will not be embedded in the same luminaire 120 as this speaker 102. In other words, associated microphones 104 and speakers 102 will not be co-located within the same luminaire 120.

Further, the system 100 includes a plurality of pairs 206. Each pair 206 includes at least one of the plurality of microphones 104 and at least one of the plurality of speakers 102. For example, the system 100 of FIG. 2 with three microphones 104 and two speakers 102 may have up to six total pairs.

Further, each pair 206 forms one of a plurality of audio multipath transmission channels 208. The audio multipath transmission channels 208 are the channels the audio signals 132 travel in following transmission by the speakers 102 and before reception by the microphones 104. An example audio multipath transmission channel 208 is shown in FIG. 2 as the channel 208 between speaker 102b and microphone 104b of luminaire 120b. The audio multipath transmission channel 208 may be three-dimensional and shaped like an American football: narrow at the point of transmission, wide in the middle, and narrow at the point of reception. In an example, one of the channels 208 may contain multiple audio paths (hence, "multipath") due to reflections of the transmitted audio signal 132 off of walls, the floor, the ceiling, or one of more objects. This multipath feature of the channels 208 may be advantageous in expanding the coverage of the transmitted audio signals 132.

In addition, the multipath nature of the audio transmission channels 208 can be exploited by the sensing mechanisms of the system 100. For instance, due to the reflections, a table to be detected by the system 100 will receive several incoming audio signals 132 from different directions; a first audio signal 132 which directly reaches the table surface; a second audio signal 132, which reaches the table after a reflection from the wall; and a third audio signal 132, which reaches the table after reflection from another object. The system 100 can separate the different audio paths (e.g. based on intensity of the signal and audio delay at the microphone) and use the three different multipaths in its sensing algorithm to evaluate the desired characteristics 136 of the portion 202 of the building space 202.

Each pair 206 may be associated with at least one of one or more detection areas 204 within the portion 202 of the building space 200 to be evaluated. In a typical example, the detection areas 204 may be desks or other areas where one or more people are likely to sit and/or congregate. For example, a detection area 204 may be an area where people are continually travelling through, such as an entrance to a retail space. According to an example, the system 100 may further include a commissioning subsystem 130. The commissioning subsystem 130 may be configured to associate the plurality of pairs 206 with the one or more detection areas 204. The association may be facilitated by a transceiver 450.

In a further example, the commissioning subsystem 130 may be utilized to train the system 100. For instance, the commissioning subsystem 130 may perform a first audio sensing measurement without a table in the room, and then perform a second audio sensing measurement with a table at a first position. Then the commissioning subsystem 130 may record a third audio sensing measurement with the table at a second position. The training data collected by the commissioning subsystem 130 may be used by an association algorithm to determine which luminaire-embedded microphones and/or speakers to use to sense for the desk at the suspected positions. The training data may also be used in the evaluation of the characteristics 136 of the building space 200 to discern the presence/current position of the desk. The system 100 may also be re-calibrated at times during the economic lifetime of the system 100 to ensure that aging of the speakers 102 and microphones 104 do not degrade the audio sensing performance.

The system 100 further includes a controller 106. The controller 106 may include a memory 250, a processor 300, and a transceiver 410. The memory 250 and processor 300 may be communicatively coupled via a bus to facilitate processing of data stored in memory 300. Transceiver 410 may be used to transmit command signals 114 to the plurality of speakers 102 and to receive audio samples 108 from the plurality of microphones 104 via the network 400. The data received by the transceiver 410 may be stored in memory 250 and/or processed by processor 300. In an example, the transceiver 410 may facilitate a wireless connection between the controller 106 and the network 400.

The network 400 may be configured to facilitate communication between the controller 106, the luminaires 120, the microphones 104, the speakers 102, the commissioning subsystem 130, the user interface 126, and/or any combination thereof. The network 400 may be a wired and/or wireless network following communication protocols such as Bluetooth, Wi-Fi, Zigbee, and/or other appropriate communication protocols. In an example, the luminaires 120 may wirelessly transmit, via the network 400, the audio samples 108 to the controller 106 for storage in memory 250 and/or processing by the processor 300.

The controller 106 may be communicatively coupled to each of the plurality of speakers 102 via transceiver 410. The controller 106 may also be communicatively coupled to each of the plurality of microphones 104 via transceiver 410.

The controller 106 is configured to select one or more of the one or more detection areas 204. As shown in FIG. 2, the detection areas correspond to the portion 202 of the building space 200 undergoing characteristic 136 evaluation. In the example of FIG. 2, detection areas 204b and 204c are within the portion 202 of the building space 200 to be analyzed. These detection areas 204b, 204c may be desks where employees are expected to sit during work hours.

According to an example, the system 100 may further include a user interface 126 configured to receive one or more detection area selections 128 from a user. The user interface 126 may be a personal computer, smartphone, or any other device which allows a user to designate detection areas 204 of the building space 200. FIG. 2 shows an example where the user wishes to determine the characteristic 136 of the portion 202 of the building space 200 encompassing detection areas 204b and 204c. The user may enter detection area selections 128 corresponding to detection areas 204b, 204c via a user interface 126 by, depending on the embodiment of the interface 126, either selecting each individual detection area 204, or by selecting the portion 202 as a whole.

The controller 106 is further configured to activate one or more of the plurality of microphones 104 to capture one or more audio samples 108. Each of the activated microphones 110 may correspond to at least one of the pairs 206 associated with one or more of the selected detection areas 204. FIG. 2 shows an example where the detection areas 204b and 204c have been selected. Accordingly, microphones 104a and 104b have been activated. Pairs 206 including microphones 104a, 104b may have been associated with detection areas 204b, 204c by the commissioning subsystem 130 due to the spatial proximity of the microphones 104a, 104b. In the 3-dimensional domain, luminaire 120a, which includes microphone 104a, may be positioned approximately above detection area 204b. Similarly, luminaires 120a and 120b, which include microphones 104a and 104b, respectively, may be positioned approximately above detection area 204c.

The controller 106 is further configured to select one or more of the plurality of speakers 102 based on a baseline channel response matrix 112 and the activated microphones 110. The baseline channel response matrix 112 represents the audio transmission channel between each microphone 104 and speaker 102 when the building space 200 is in baseline condition. In baseline condition, the building space 200 is typically unoccupied and either completely empty, or outfitted with only fixed-position furniture. In an example where building space 200 is equipped with M = 3 speakers and $N$ = 50 microphones, the relationship between the speakers 102 and the microphones 104 may be defined as channel matrix algorithm 275:

$$\begin{bmatrix} y_0(t) \\ ... \\ y_{N-1}(t) \end{bmatrix} = \begin{bmatrix} h_{0,0} & ... & h_{0,M-1} \\ ... & ... & ... \\ h_{N-1,0} & ... & h_{N-1,M-1} \end{bmatrix} \begin{bmatrix} a_0 x_0(t) \\ ... \\ a_{M-1} x_{M-1}(t) \end{bmatrix} + \begin{bmatrix} n_0(t) \\ ... \\ n_{M-1}(t) \end{bmatrix} \quad (1)$$

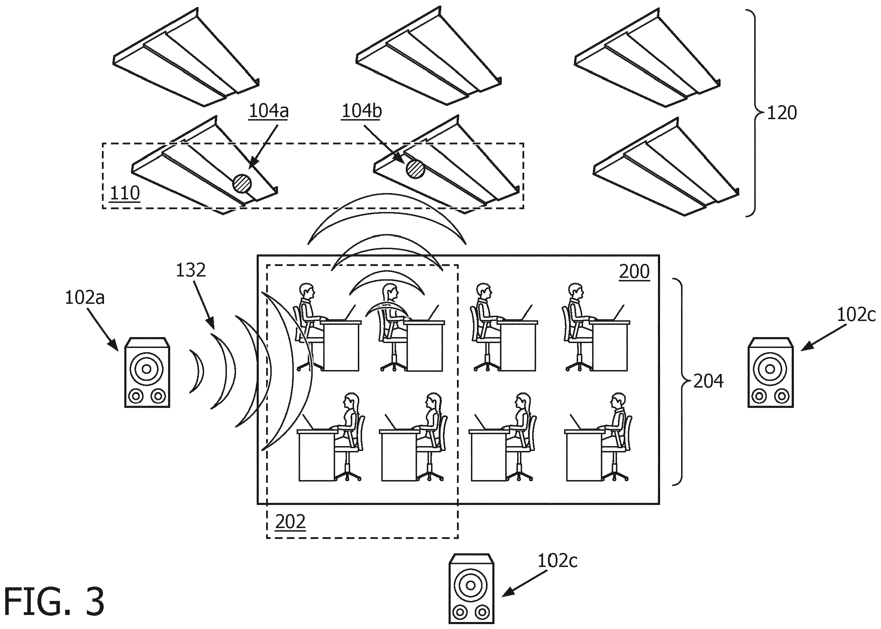

where $y_n(t)$ is the received signal at the nth microphone 104, $x_m(t)$ is the unit transmission signal from the electro-acoustic transducer of the mth speaker 102, $a_m$ is the transmission gain, $n_m(t)$ is the noise at the microphone 104, and $h_{n,m}(t)$ is the audio channel response of the building space 200 as the audio signal 132 travels from the mth speaker to the nth microphone. When the building space 200 is in baseline condition, $h_{n,m}(t)$ will be the baseline channel matrix 112. The audio channel response parameters are determined by the environment in which the microphones 104 and speakers 102 are arranged, such as the layout of desks in an office environment. If the furniture arrangement in the building space 200 remains unchanged for some time, people movement will be the main source of changes in the channel response. The pattern changes of $h_{n,m}(t)$, both (1) over time and (2) relative to the baseline channel matrix 112, are used for evaluating characteristics 136 such as presence detection, people counting, fall detection, breathing detection, and more. In a further example, the controller 106 may further limit the selected speakers 116 to speakers 102 associated with the one or more detection areas 204 by commissioning subsystem 130. With reference to FIG. 3, and according to an example, a speaker 102 may be selected if the baseline channel matrix 112 value associated with the speaker 102 and an activated microphone 110 is above a channel threshold value, such as 0.01. As seen in FIG. 3, the system 100 is analyzing the left portion 202 of the building space 200 encompassing four desks. Continuing with this example, microphones 104a and 104b may be activated based on proximity to the four desks as designated during commissioning. As shown in FIG. 3, audio signals 132 generated by speaker 102a are likely to be received by microphone 102a. Therefore, the baseline channel matrix 112 value for $h_{a,a}$ will be greater than the threshold value of 0.01. Accordingly, speaker 102a will be selected to transmit audio signals 132 to evaluate the desired characteristic 136 of the portion 202 of the building space 200. Conversely, speaker 102c is positioned distally from both the portion 202 of the building space 200 under evaluation, as well as the activated microphones 110, namely, microphones 104a and 104b. As such, any audio signals 132 emitted by speaker 102c will be highly attenuated when received by microphones 104a, 104b, resulting in $h_{a,b}$ and $h_{a,c}$ values less than the threshold value of 0.01. Accordingly, speaker 102c will not be selected to transmit audio signals 132 to evaluate the desired characteristic 136 of the portion 202 of the building space 200.

The channel threshold value may be adjusted according to circumstances of the system 100. For example, if the system 100 has relatively low computational capacity, the threshold may be set relatively high, such that only the strongest speaker-to-microphone audio channels are enabled. Conversely, if the evaluation of the desired characteristic 136 requires granular data, the threshold may be set relatively low to enable a higher number of speaker-to-microphone channels.

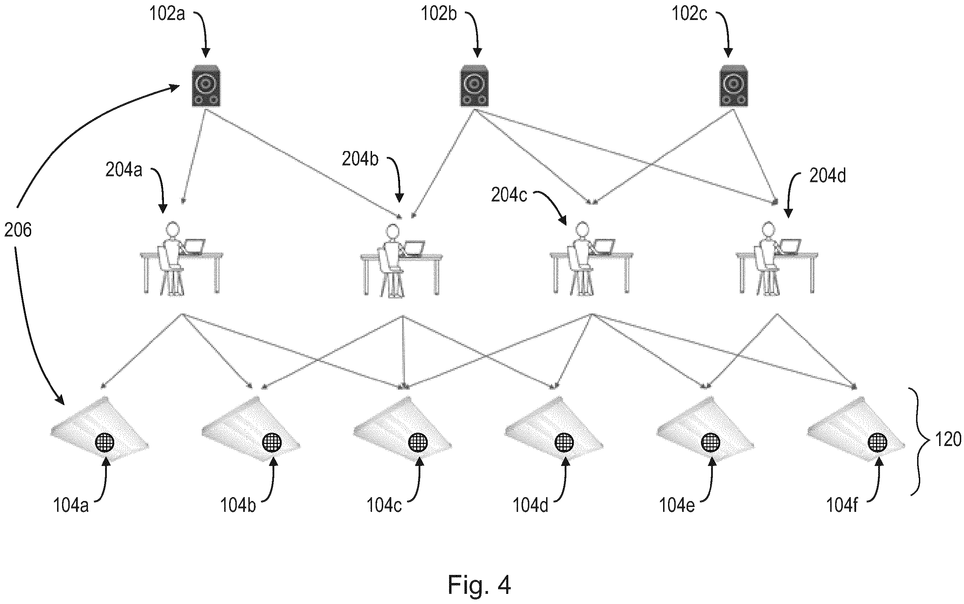

The association between the pairs 206 of speakers 102 and microphones 104 (embedded in luminaires 120) with the detection areas 204 may be represented by the graphical tree model shown in FIG. 4. This graphical tree model demonstrates which pairs 206 of speakers 102 and microphones 104 should be used to most efficiently analyze the characteristics 136 of detection areas 204. For example, to analyze detection area 204b, microphones 104b, 104c, and 104d should be activated, and speakers 102a and 102b should be selected. Accordingly, FIG. 4 illustrates that a detection area 204 may be monitored by more than one microphone-speaker pair. Similarly, a microphone 104 or speaker 102 may be associated with more than one detection area 204.

The controller 106 is further configured to transmit a command signal 114 to each of the selected speakers 116. The electro-acoustic transducers of the selected speakers 116 then generate audio signals 132 corresponding to the command signal 114 for transmission in the building space 200. In one example, the controller 106 transmits identical command signals 114 to each of the selected speakers 116. In response to receiving the identical command signals 114, the selected speakers 116 may generate identical audio signals 132. In a further example, the controller 106 transmits differing command signals 114 to each of the selected speakers 116. In response to receiving the differing command signals 114, the selected speakers 116 may generate differing audio signals 132. The differing audio signals 132 may be configured to avoid interference with one another during simultaneous transmission. The differing audio signals 132 may differ based on their amplitude, frequency, phase, modulation, and/or coding characteristics.

According to an example, the selected speakers 116 may be configured to sequentially transmit one of the plurality of audio signals 132. In this example, the electro-acoustic transducers of the selected speakers 116 take turns generating audio signals 132 based on the command signals 114 in order to avoid interference.

According to a further example, the selected speakers 116 may be configured to simultaneously transmit one of the plurality of audio signals 132. In this example, the electro-acoustic transducers of two or more of the selected speakers 116 generate audio signals 132 at the same time. Further to this example, the audio signals 132 generated simultaneously by the selected speakers 116 may be orthogonal in order to avoid interference during simultaneous audio broadcast.

Further, a hybrid audio signal 132 transmission scheme may be implemented. In this example, the audio signals 132 related to evaluating more sensitive characteristics 136 (such as breathing detection) may be transmitted sequentially, while audio signals 132 related to less sensitive characteristics 136 (such as occupancy) may be transmitted simultaneously.

The audio signals 132 may be orthogonal with reference to their respective time domains, frequency domains, and coding. For example, the audio signals 132 may be direct-sequence spread spectrum (DSSS) pulses which are orthogonal in the time domain. Accordingly, the audio signals 132 generated by the selected speakers 116 will cause no or minimum neglectable interference to each other, even when transmitted simultaneously. Further each orthogonal DSSS signal 132 will not interfere with the delayed versions of itself generated due to multiple reflections in the building space 200. Therefore, the system 100 can detect the identity of each audio signal 132 received at each luminaire-embedded microphone 104. For example, the system 100 can determine whether the audio signal 132 originated from speaker 102a, 102b, or a combination of 102a and 102b. Further, the microphone 102 may use an orthogonal matched filter to filter out undesired signals 132 generated by speakers 102a and/or 102b, respectively.

According to a further example, each of the plurality of audio signals 132 may have a frequency greater than or equal to 16 kHz. By having a frequency greater than or equal to 16 kHz, the audio signals 132 generated by the speakers 102 will be beyond human hearing perception. Thus, this example of the system 100 may evaluate one or more characteristics 136 of the portion 202 of the building space 200 without disturbing the occupants of the building space 200. In a further example, the audio signals 132 may be white noise in environments where suppressing intelligible speech and background sound would be desirable.

In a further example, each of the plurality of audio signals 132 may have a frequency between 20 Hz and 16 kHz. In this example, the audio signals 132 generated by the speakers 102 may be audible to occupants of the building space 200. This frequency range may be desirable for office monitoring when the office is closed, or to alert occupants during an evacuation. In the latter example, the system 100 may continuously count the people in the building space 200 while broadcasting audio signals 132 in the form of an alarm and/or audio commands.

According to a further example, the speakers 102 may be arranged proximate to corners of the building space 200. Placing the speakers 102 proximate to the corners allows for the audio signals 132 generated by the selected speakers 116 to reflect off the walls of the building space 200, resulting in multipath audio transmission channels above the channel threshold. Accordingly, arranging the speakers 102 in this manner may result in a greater number of microphones 104 receiving usable audio information from the speakers 102.

The controller 106 is further configured to determine a characteristic channel response matrix 118 based on the captured audio samples 108 and the transmitted audio signals 132. The characteristic channel response matrix 118 may be determined by using the channel matrix algorithm 275 recited above, wherein where $y_n(t)$ are the audio received by the activated microphones 110, $x_m(t)$ are the unit transmission signals of the audio signals 132 transmitted by the selected speakers 116, $a_m$ is the transmission gain applied to the audio signals 132 (such as by the controller 106, an internal amplifier of the selected speaker 116, or an external amplification device), $n_m(t)$ are the noise levels at each activated microphone 110, and $h_{n,m}(t)$ is the channel response matrix for the signal from the mth speaker to the nth microphone. Accordingly, the audio signals 132 transmitted by the selected speakers 116 may be represented as the product of $x_m(t)$ and $a_m$, the captured audio samples 108 may be represented by $y_n(t)$, and the characteristic channel response matrix 118 may be represented by $h_{n,m}(t)$. In an example, the transmission gain, $a_m$, may be increased to extend the range of an audio signal 132. In a further example, the transmission gain, $a_m$, may be decreased to avoid interference with audio signals 132 transmitted by other selected speakers 116.

The controller 106 is further configured to evaluate the characteristic 136 of the portion 202 of the building space 200 based on the characteristic channel response matrix 118 and the baseline channel response matrix 112. The processor 300 may be configured to implement one or more algorithms to determine occupancy, people count, fall detection, or additional characteristics based on the characteristic channel response matrix 118 and the baseline channel response matrix 112. For example, a significant difference in values between the two matrices may be indicative of the building space 200 being occupied by one or more persons. The processor 300 may evaluate the characteristic 136 using an artificial intelligence and/or machine learning classification algorithm.

In an example, the controller 106 transmits a series of command signals 114 to each selected speaker 116, which in turn generates a series of audio signals 132 transmitted within the building space 200. This series of audio signals 132, and the subsequent series of captured audio samples 108 by the activated microphones 110 allows the processor 300 to calculate a series of characteristic channel response matrices 118 based on the channel matrix algorithm 275. Utilizing a series of channel response matrices 118 allows the system 100 to evaluate characteristics 136 with greater certainty. In an occupancy evaluation example, the system 100 may be configured to generate a characteristic channel response matrix 118 every 0.2 seconds, resulting in a measurement rate of 5 Hz.

Further, calculating a series of characteristic channel response matrices 118 allows the system 100 to evaluate more complicated characteristics 136, such as motion of occupants of the building space 200. For example, a series of characteristic channel response matrices 118 may be evaluated to detect if a person within the portion 202 of the building space 200 has fallen. In a fall detection example, the data to be evaluated must be significantly richer than the occupancy example. Accordingly, the characteristic channel response matrices 118 may be measured and calculated at a rate of 1 kHz. In a related example, a series of characteristic channel response matrices 118 may be evaluated to determine if an occupant is breathing.

In a further example, the series of audio signals 132 may include signals of a range of frequencies in predetermined frequency steps. For example, the audio signals 132 may have frequencies between 16 kHz and 18 kHz, with a step size of .1 kHz. Accordingly, the audio signals 132 transmitted by the selected speakers 116 may have frequencies of 16.0 kHz, 16.1 kHz, 16.2 kHz, up to 18.0 kHz, allowing the system 100 to calculate characteristic channel response matrices 118 for each of the frequencies of this range. Varying the frequency of the audio signals 132 provides additional depth to the series of characteristic channel responses matrices 118 evaluated for the desired characteristics 136.

While one of the goals of the activation of a subset of microphones 104 and the selection of a subset of speakers 102 is to improve processing efficiency by focusing on the most important audio transmission channels, evaluating certain characteristics 136 may still require processing a large amount of data. This may be especially true in the evaluation of characteristics 136 such as fall detection, which require a very rich data set, resulting in the calculation of hundreds or thousands of characteristic channel response matrices 118 every second. In these cases, the system 100 may transmit some or all of the captured audio samples 108, calculated characteristic channel response matrices 118, or other data to one or more external processing subsystems. Depending on the volume of data to be processed, these subsystems may be used to calculate the characteristic channel response matrices 118 and/or evaluate the desired characteristics 136. These processing subsystems may be located within or outside the building space 200 depending on the application.

According to an example, the controller 106 may be further configured to determine the baseline channel response matrix 112 by: (1) activating each of the plurality of microphones 104 to capture one or more baseline audio samples 122; (2) transmitting a command signal 124 to each of the plurality of speakers 102 while the building space 200 is in baseline condition, wherein each of the speakers 102 are configured to generate a plurality of baseline audio signals 134 based on, or in response to, the baseline command signal 124; and calculating the baseline channel response matrix 112 based on the baseline audio signals 134 and the baseline audio samples 122 utilizing the channel matrix algorithm 275. In this example, the controller 106 activates all microphones 104 and selects all speakers 102 to calculate the baseline channel matrix 112 when the building space 200 is in baseline condition. In a further example, the system 100 may be configured to periodically calibrate by re-calculating the baseline channel response matrix 112. This calibration allows the baseline channel response matrix 112 to account for re-arrangements of furniture and fixtures in the building space 200. For example, this calibration may automatically occur on a nightly, weekly, or monthly basis. In a further example, a user could initiate or program the calibration using the user interface 126.

According to an example, the system 100 may be arranged as a "ring". In this ring arrangement, the plurality of luminaires 120 have embedded speakers 102 and microphones 104. In the following illustrative example, the ring arrangement includes six luminaires 120 arranged about the building space 200. A first characteristic channel response matrix 118 may be calculated by selecting the speaker 102a of the first luminaire 120a to transmit audio signals 132, while activating the microphones 104b-104f of the other luminaires 120b-120f. The system 100 then calculates a second characteristic channel response matrix 118 by selecting the speaker 102b of the second luminaire 102b, while activating the microphones 102a, 102c-102f of the remaining luminaires 120a, 120c-120f. The system 100 calculates additional characteristic channel response matrices 118 by cycling through the speakers 102 and microphones 104 of each luminaire 120, while never simultaneously enabling co-located speakers 102 and microphones 104. As described above, in order to evaluate more complicated characteristics 136, the system 100 may cycle through the ring arrangement multiple times to generate a large number of characteristic channel response matrices 118.

According to another aspect, a method 500 for evaluating a characteristic of a portion of a building space is provided. The method 500 includes selecting 502 one or more of one or more detection areas. The one or more detection areas are within the portion of the building space. The method 500 further includes activating 504 one or more of a plurality of microphones to capture one or more audio samples. Each of the activated microphones corresponds to at least one of a plurality of pairs associated with one or more of the selected detection areas. Each pair includes at least one of the plurality of microphones and at least one of a plurality of speakers. Each pair forms one of a plurality of audio multipath transmission channels.

The method 500 further includes selecting 506 one or more of the plurality of speakers based on a baseline channel response matrix and the activated microphones. The method 500 further includes transmitting 508, via each of the selected speakers, one of a plurality of audio signals. The method 500 further includes determining 510 a characteristic channel response matrix based on the captured audio samples and the transmitted audio signals. The method 500 further includes evaluating 512 the characteristic of the portion of the building space based on the characteristic channel response matrix and the baseline channel response matrix.

According to an example, the method 500 may further include activating 514 each of the plurality of microphones to capture one or more baseline audio samples. The method 500 may further include transmitting 516, via each of the plurality of speakers, one of a plurality of baseline audio signals while the building space is in baseline condition. The method 500 may further include calculating 518 the baseline channel response matrix based on the baseline audio signals and the baseline audio samples.

According to an example, the method 500 may further include associating 520, via a commissioning subsystem, the plurality of pairs with the plurality of detection areas. All definitions, as defined and used herein, should be understood to control over dictionary definitions, and/or ordinary meanings of the defined terms.

The indefinite articles "a" and "an," as used herein in the specification and in the claims, unless clearly indicated to the contrary, should be understood to mean "at least one."

The phrase "and/or," as used herein in the specification and in the claims, should be understood to mean "either or both" of the elements so conjoined, i.e., elements that are conjunctively present in some cases and disjunctively present in other cases. Multiple elements listed with "and/or" should be construed in the same fashion, i.e., "one or more" of the elements so conjoined. Other elements may optionally be present other than the elements specifically identified by the "and/or" clause, whether related or unrelated to those elements specifically identified.

As used herein in the specification and in the claims, "or" should be understood to have the same meaning as "and/or" as defined above. For example, when separating items in a list, "or" or "and/or" shall be interpreted as being inclusive, i.e., the inclusion of at least one, but also including more than one, of a number or list of elements, and, optionally, additional unlisted items. Only terms clearly indicated to the contrary, such as "only one of' or "exactly one of," or, when used in the claims, "consisting of," will refer to the inclusion of exactly one element of a number or list of elements. In general, the term "or" as used herein shall only be interpreted as indicating exclusive alternatives (i.e. "one or the other but not both") when preceded by terms of exclusivity, such as "either," "one of," "only one of," or "exactly one of."

As used herein in the specification and in the claims, the phrase "at least one," in reference to a list of one or more elements, should be understood to mean at least one element selected from any one or more of the elements in the list of elements, but not necessarily including at least one of each and every element specifically listed within the list of elements and not excluding any combinations of elements in the list of elements. This definition also allows that elements may optionally be present other than the elements specifically identified within the list of elements to which the phrase "at least one" refers, whether related or unrelated to those elements specifically identified.

It should also be understood that, unless clearly indicated to the contrary, in any methods claimed herein that include more than one step or act, the order of the steps or acts of the method is not necessarily limited to the order in which the steps or acts of the method are recited.

In the claims, as well as in the specification above, all transitional phrases such as "comprising," "including," "carrying," "having," "containing," "involving," "holding," "composed of," and the like are to be understood to be open-ended, i.e., to mean including but not limited to. Only the transitional phrases "consisting of" and "consisting essentially of' shall be closed or semi-closed transitional phrases, respectively.

The above-described examples of the described subject matter can be implemented in any of numerous ways. For example, some aspects may be implemented using hardware, software or a combination thereof. When any aspect is implemented at least in part in software, the software code can be executed on any suitable processor or collection of processors, whether provided in a single device or computer or distributed among multiple devices/computers.

The present disclosure may be implemented as a system, a method, and/or a computer program product at any possible technical detail level of integration. The computer program product may include a computer readable storage medium (or media) having computer readable program instructions thereon for causing a processor to carry out aspects of the present disclosure.

The computer readable storage medium can be a tangible device that can retain and store instructions for use by an instruction execution device. The computer readable storage medium may be, for example, but is not limited to, an electronic storage device, a magnetic storage device, an optical storage device, an electromagnetic storage device, a semiconductor storage device, or any suitable combination of the foregoing. A nonexhaustive list of more specific examples of the computer readable storage medium includes the following: a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon, and any suitable combination of the foregoing. A computer readable storage medium, as used herein, is not to be construed as being transitory signals per se, such as radio waves or other freely propagating electromagnetic waves, electromagnetic waves propagating through a waveguide or other transmission media (e.g., light pulses passing through a fiber-optic cable), or electrical signals transmitted through a wire.

Computer readable program instructions described herein can be downloaded to respective computing/processing devices from a computer readable storage medium or to an external computer or external storage device via a network, for example, the Internet, a local area network, a wide area network and/or a wireless network. The network may comprise copper transmission cables, optical transmission fibers, wireless transmission, routers, firewalls, switches, gateway computers and/or edge servers. A network adapter card or network interface in each computing/processing device receives computer readable program instructions from the network and forwards the computer readable program instructions for storage in a computer readable storage medium within the respective computing/processing device.

Computer readable program instructions for carrying out operations of the present disclosure may be assembler instructions, instruction-set-architecture (ISA) instructions, machine instructions, machine dependent instructions, microcode, firmware instructions, state-setting data, configuration data for integrated circuitry, or either source code or object code written in any combination of one or more programming languages, including an object oriented programming language such as Smalltalk, C++, or the like, and procedural programming languages, such as the "C" programming language or similar programming languages. The computer readable program instructions may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider). In some examples, electronic circuitry including, for example, programmable logic circuitry, field-programmable gate arrays (FPGA), or programmable logic arrays (PLA) may execute the computer readable program instructions by utilizing state information of the computer readable program instructions to personalize the electronic circuitry, in order to perform aspects of the present disclosure.

Aspects of the present disclosure are described herein with reference to flowchart illustrations and/or block diagrams of methods, apparatus (systems), and computer program products according to examples of the disclosure. It will be understood that each block of the flowchart illustrations and/or block diagrams, and combinations of blocks in the flowchart illustrations and/or block diagrams, can be implemented by computer readable program instructions.

The computer readable program instructions may be provided to a processor of a, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks. These computer readable program instructions may also be stored in a computer readable storage medium that can direct a computer, a programmable data processing apparatus, and/or other devices to function in a particular manner, such that the computer readable storage medium having instructions stored therein comprises an article of manufacture including instructions which implement aspects of the function/act specified in the flowchart and/or block diagram or blocks.

The computer readable program instructions may also be loaded onto a computer, other programmable data processing apparatus, or other device to cause a series of operational steps to be performed on the computer, other programmable apparatus or other device to produce a computer implemented process, such that the instructions which execute on the computer, other programmable apparatus, or other device implement the functions/acts specified in the flowchart and/or block diagram block or blocks.

The flowchart and block diagrams in the Figures illustrate the architecture, functionality, and operation of possible implementations of systems, methods, and computer program products according to various examples of the present disclosure. In this regard, each block in the flowchart or block diagrams may represent a module, segment, or portion of instructions, which comprises one or more executable instructions for implementing the specified logical function(s). In some alternative implementations, the functions noted in the blocks may occur out of the order noted in the Figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

Other implementations are within the scope of the following claims.

While various examples have been described and illustrated herein, those of ordinary skill in the art will readily envision a variety of other means and/or structures for performing the function and/or obtaining the results and/or one or more of the advantages described herein, and each of such variations and/or modifications is deemed to be within the scope of the examples described herein. More generally, those skilled in the art will readily appreciate that all parameters, dimensions, materials, and configurations described herein are meant to be exemplary and that the actual parameters, dimensions, materials, and/or configurations will depend upon the specific application or applications for which the teachings is/are used. Those skilled in the art will recognize, or be able to ascertain using no more than routine experimentation, many equivalents to the specific examples described herein. It is, therefore, to be understood that the foregoing examples are presented by way of example only and that, within the scope of the appended claims examples may be practiced otherwise than as specifically described.

**Claims**

1. A system (100) for evaluating a characteristic (136) of a portion (202) of a building space (200), comprising:

   a plurality of speakers (102);
   a plurality of microphones (104);
   a plurality of pairs (206), wherein each pair (206) comprises at least one of the plurality of microphones (104) and at least one of the plurality of speakers (106), wherein each pair (206) forms one of a plurality of audio multipath transmission channels (208), and wherein at least one of the plurality of pairs (206) is associated with at least one of one or more detection areas (204) within the portion (202) of the building space (200);
   a controller (106) communicatively coupled to each of the plurality of speakers (102) and to each of the plurality of microphones (104), configured to:
   select one or more of the one or more detection areas (204);
   activate one or more of the plurality of microphones (104) to capture one or more audio samples (108), wherein each of the activated microphones (110) corresponds to at least one of the pairs (206) associated with one or more of the selected detection areas (204);

   select one or more of the plurality of speakers (102) based on a baseline channel response matrix (112) and the activated microphones (110), the baseline channel response matrix representing an audio transmission channel between the one or more of the plurality of microphones (104) and the one or more of the plurality of speakers (106) of the portion (202) of the building space (200);
   transmit a command signal (114) to each of the selected speakers (116), wherein the selected speakers (116) are configured to generate a plurality of audio signals (132) based on the command signal (114); determine a characteristic channel response matrix (118) based on the audio samples (108) and the audio signals (132); and

evaluate the characteristic (116) of the portion (202) of the building space (200) based on the characteristic channel response matrix (118) and the baseline channel response matrix (112).

2. The system (100) of claim 1, further comprising a plurality of luminaires (120), wherein each luminaire (120) comprises one or more of the plurality of microphones (104).

3. The system (100) of claim 2, wherein each of the plurality of speakers (102) are arranged in the building space (200) apart from the plurality of luminaires (120).

4. The system (100) of claim 1, wherein the controller (106) is further configured to determine the baseline channel response matrix (112) by:

activating each of the plurality of microphones (104) to capture one or more baseline audio samples (122); transmit a baseline command signal (124) to each of the plurality of speakers (102) while the building space (200) is in baseline condition, wherein each of the speakers (102) are configured to generate a plurality of baseline audio signals (134) based on the baseline command signal (124); and

calculating the baseline channel response matrix (112) based on the baseline audio signals (134) and the baseline audio samples (122).

5. The system (100) of claim 1, wherein the selected speakers (116) are configured to sequentially transmit one of the plurality of audio signals (132).

6. The system (100) of claim 1, wherein the selected speakers (116) are configured to simultaneously transmit one of the plurality of audio signals (132).

7. The system (100) of claim 6, wherein the audio signals (132) transmitted simultaneously are orthogonal.

8. The system (100) of claim 1, further comprising a user interface (126) configured to receive one or more detection area selections (128) from a user.

9. The system (100) of claim 1, wherein each of the plurality of speakers (102) are directional.

10. The system (100) of claim 1, wherein each of the plurality of microphones (104) are omnidirectional.

11. The system (100) of claim 1, wherein each of the plurality of audio signals (132) has a frequency greater than or equal to 16 kHz.

12. The system (100) of claim 1, further comprising a commissioning subsystem (130) configured to associate one or more of the plurality of pairs (206) with one or more of the one or more detection areas (204).

13. A method (500) for evaluating a characteristic of a portion of a building space, comprising:

selecting (502) one or more of one or more detection areas, wherein the one or more detection areas are within the portion of the building space; activating (504) one or more of a plurality of microphones to capture one or more audio samples, wherein each of the activated microphones corresponds to at least one of a plurality of pairs associated with one or more of the selected detection areas, wherein each pair comprises at least one of the plurality of microphones and at least one of a plurality of speakers, and wherein each pair forms one of a plurality of audio multipath transmission channels; selecting (506) one or more of the plurality of speakers based on a baseline channel response matrix and the activated microphones, the baseline channel response matrix representing an audio transmission channel between the one or more of the plurality of microphones (104) and the one or more of the plurality of speakers (106) of the portion (202) of the building space (200); transmitting (508), via each of the selected speakers, one of a plurality of audio signals; determining (510) a characteristic channel response matrix based on the audio samples and the audio signals;

and

evaluating (512) the characteristic of the portion of the building space based on the characteristic channel response matrix and the baseline channel response matrix.

14. The method (500) of claim 13, further comprising:

activating (514) each of the plurality of microphones to capture one or more baseline audio samples;
transmitting (516), via each of the plurality of speakers, one of a plurality of baseline audio signals while the building space is in baseline condition; and
calculating (518) the baseline channel response matrix based on the baseline audio signals and the baseline audio samples.

15. The method (500) of claim 13, further comprising associating (520), via a commissioning subsystem, one or more of the plurality of pairs with one or more of the plurality of detection areas.

## Patentansprüche

1. System (100) zum Auswerten einer Eigenschaft (136) eines Abschnitts (202) eines Gebäuderaums (200), umfassend:

eine Vielzahl von Lautsprechern (102);
eine Vielzahl von Mikrofonen (104);
eine Vielzahl von Paaren (206), wobei jedes Paar (206) mindestens eines von der Vielzahl von Mikrofonen (104) und mindestens einen von der Vielzahl von Lautsprechern (106) umfasst, wobei jedes Paar (206) einen von einer Vielzahl von Audiomehrwegeübertragungskanälen (208) ausbildet, und wobei mindestens eines der Vielzahl von Paaren (206) mindestens einem von einem oder mehreren Erfassungsbereichen (204) innerhalb des Abschnitts (202) des Gebäuderaums (200) zugeordnet ist;
eine Steuervorrichtung (106), die mit jedem der Vielzahl von Lautsprechern (102) und mit jedem der Vielzahl von Mikrofonen (104) kommunikativ gekoppelt ist, konfiguriert zum:

Auswählen eines oder mehrerer des einen oder der mehreren Erfassungsbereiche (204);
Aktivieren eines oder mehrerer der Vielzahl von Mikrofonen (104), um ein oder mehrere Audiobeispiele (108) aufzunehmen, wobei jedes der aktivierten Mikrofone (110) mindestens einem der Paare (206) entspricht, die einem oder mehreren der ausgewählten Erfassungsbereiche (204) zugeordnet sind;
Auswählen eines oder mehrerer der Vielzahl von Lautsprechern (102) basierend auf einer Basislinienkanalantwortmatrix (112) und den aktivierten Mikrofonen (110), wobei die Basislinienkanalantwortmatrix einen Audioübertragungskanal zwischen dem einen oder den mehreren der Vielzahl von Mikrofonen (104) und dem einen oder den mehreren der Vielzahl von Lautsprechern (106) des Abschnitts (202) des Gebäuderaums (200) darstellt;
Übertragen eines Befehlssignals (114) an jeden der ausgewählten Lautsprecher (116), wobei die ausgewählten Lautsprecher (116) konfiguriert sind, um eine Vielzahl von Audiosignalen (132) basierend auf dem Befehlssignal (114) zu erzeugen;
Bestimmen einer Eigenschaftskanalantwortmatrix (118) basierend auf den Audiobeispielen (108) und den Audiosignalen (132); und
Auswerten der Eigenschaft (116) des Abschnitts (202) des Gebäuderaums (200) basierend auf der Eigenschaftskanalantwortmatrix (118) und der Basislinienantwortmatrix (112).

2. System (100) nach Anspruch 1, ferner umfassend eine Vielzahl von Leuchtkörpern (120), wobei jeder Leuchtkörper (120) eines oder mehrere der Vielzahl von Mikrofonen (104) umfasst.

3. System (100) nach Anspruch 2, wobei jeder der Vielzahl von Lautsprechern (102) in dem Gebäuderaum (200) getrennt von der Vielzahl von Leuchtkörpern (120) angeordnet ist.

4. System (100) nach Anspruch 1, wobei die Steuervorrichtung (106) ferner konfiguriert ist, um die Basislinienantwortmatrix (112) zu bestimmen durch:

Aktivieren jedes der Vielzahl von Mikrofonen (104), um ein oder mehrere Basislinienaudiobeispiele (122) aufzunehmen;
Übertragen eines Basislinienbefehlssignals (124) an jeden der Vielzahl von Lautsprechern (102), während sich der Gebäuderaum (200) in einem Basislinienzustand befindet, wobei jeder der Lautsprecher (102) konfiguriert ist, um eine Vielzahl von Basislinienaudiosignalen (134) basierend auf dem Basislinienbefehlssignal (124) zu erzeugen; und

Berechnen der Basislinienkanalantwortmatrix (112) basierend auf den Basislinienaudiosignalen (134) und den Basislinienaudiobeispielen (122).

5. System (100) nach Anspruch 1, wobei die ausgewählten Lautsprecher (116) konfiguriert sind, um eines der Vielzahl von Audiosignalen (132) nacheinander zu übertragen.

6. System (100) nach Anspruch 1, wobei die ausgewählten Lautsprecher (116) konfiguriert sind, um eines der Vielzahl von Audiosignalen (132) gleichzeitig zu übertragen.

7. System (100) nach Anspruch 6, wobei die Audiosignale (132), die gleichzeitig übertragen werden, orthogonal sind.

8. System (100) nach Anspruch 1, ferner umfassend eine Benutzerschnittstelle (126), die konfiguriert ist, um eine oder mehrere Erfassungsbereichsauswahlen (128) von einem Benutzer zu empfangen.

9. System (100) nach Anspruch 1, wobei jeder der Vielzahl von Lautsprechern (102) gerichtet ist.

10. System (100) nach Anspruch 1, wobei jedes der Vielzahl von Mikrofonen (104) ungerichtet ist.

11. System (100) nach Anspruch 1, wobei jedes der Vielzahl von Audiosignalen (132) eine Frequenz von mehr als oder gleich 16 kHz aufweist.

12. System (100) nach Anspruch 1, ferner umfassend ein Inbetriebnahmeteilsystem (130), das konfiguriert ist, um eines oder mehrere der Vielzahl von Paaren (206) einem oder mehreren des einen oder der mehreren Erfassungsbereiche (204) zuzuordnen.

13. Verfahren (500) zum Auswerten einer Eigenschaft eines Abschnitts eines Gebäuderaums, umfassend:

Auswählen (502) eines oder mehrerer von einem oder mehreren Erfassungsbereichen, wobei sich der eine oder die mehreren Erfassungsbereiche innerhalb des Abschnitts des Gebäuderaums befinden;
Aktivieren (504) eines oder mehrerer einer Vielzahl von Mikrofonen, um ein oder mehrere Audiobeispiele aufzunehmen, wobei jedes der aktivierten Mikrofone mindestens einem von einer Vielzahl von Paaren entspricht, die einem oder mehreren der ausgewählten Erfassungsbereiche zugeordnet sind, wobei jedes Paar mindestens eines der Vielzahl von Mikrofonen und mindestens einen von einer Vielzahl von Lautsprechern umfasst, und wobei jedes Paar einen von einer Vielzahl von Audiomehrwegeübertragungskanälen ausbildet;
Auswählen (506) eines oder mehrerer der Vielzahl von Lautsprechern basierend auf einer Basislinienkanalantwortmatrix und den aktivierten Mikrofonen, wobei die Basislinienkanalantwortmatrix einen Audioübertragungskanal zwischen dem einen oder den mehreren der Vielzahl von Mikrofonen (104) und dem einen oder den mehreren der Vielzahl von Lautsprechern (106) des Abschnitts (202) des Gebäuderaums (200) darstellt;
Übertragen (508), über jeden der ausgewählten Lautsprecher, eines von einer Vielzahl von Audiosignalen;
Bestimmen (510) einer Eigenschaftskanalantwortmatrix basierend auf den Audiobeispielen und den Audiosignalen; und
Auswerten (512) der Eigenschaft des Abschnitts des Gebäuderaums basierend auf der Eigenschaftskanalantwortmatrix und der Basislinienantwortmatrix.

14. Verfahren (500) nach Anspruch 13, ferner umfassend:

Aktivieren (514) jedes der Vielzahl von Mikrofonen, um ein oder mehrere Basislinienaudiobeispiele aufzunehmen;
Übertragen (516), über jeden der Vielzahl von Lautsprechern, eines von einer Vielzahl von Basislinienaudiosignalen, während sich der Gebäuderaum in dem Basislinienzustand befindet; und
Berechnen (518) der Basislinienantwortmatrix basierend auf den Basislinienaudiosignalen und den Basislinienaudiobeispielen.

**15.** Verfahren (500) nach Anspruch 13, ferner umfassend das Zuordnen (520), über ein Inbetriebnahmeteilsystem, eines oder mehrerer der Vielzahl von Paaren zu einem oder mehreren der Vielzahl von Erfassungsbereichen.

**Revendications**

**1.** Système (100) permettant d'évaluer une caractéristique (136) d'une partie (202) d'un espace de bâtiment (200), comprenant :

une pluralité de haut-parleurs (102) ;
une pluralité de microphones (104) ;
une pluralité de paires (206), dans lequel chaque paire (206) comprend au moins l'un parmi la pluralité de microphones (104) et au moins l'un parmi la pluralité de haut-parleurs (106), dans lequel chaque paire (206) forme l'un parmi une pluralité de canaux de transmission à trajets multiples audio (208), et dans lequel au moins l'une de la pluralité de paires (206) est associée à au moins l'une parmi une ou plusieurs zones de détection (204) à l'intérieur de la partie (202) de l'espace de bâtiment (200) ;
un dispositif de commande (106) couplé en communication à chacun de la pluralité de haut-parleurs (102) et à chacun de la pluralité de microphones (104), configuré pour :

sélectionner une ou plusieurs parmi la ou les zones de détection (204) ;
activer un ou plusieurs parmi la pluralité de microphones (104) pour capturer un ou plusieurs échantillons audio (108), dans lequel chacun des microphones activés (110) correspond à au moins l'une des paires (206) associées à une ou plusieurs parmi les zones de détection sélectionnées (204) ;
sélectionner un ou plusieurs parmi la pluralité de haut-parleurs (102) sur la base d'une matrice de réponse de canal de base (112) et des microphones activés (110), la matrice de réponse de canal de base représentant un canal de transmission audio entre le ou les microphones parmi la pluralité de microphones (104) et le ou les haut-parleurs parmi la pluralité de haut-parleurs (106) de la partie (202) de l'espace de bâtiment (200) ;
transmettre un signal de commande (114) à chacun des haut-parleurs sélectionnés (116), dans lequel les haut-parleurs sélectionnés (116) sont configurés pour générer une pluralité de signaux audio (132) sur la base du signal de commande (114) ;
déterminer une matrice de réponse de canal de caractéristique (118) sur la base des échantillons audio (108) et des signaux audio (132) ; et
évaluer la caractéristique (116) de la partie (202) de l'espace de bâtiment (200) sur la base de la matrice de réponse de canal de caractéristique (118) et de la matrice de réponse de canal de base (112).

**2.** Système (100) selon la revendication 1, comprenant en outre une pluralité de luminaires (120), dans lequel chaque luminaire (120) comprend un ou plusieurs parmi la pluralité de microphones (104).

**3.** Système (100) selon la revendication 2, dans lequel chacun de la pluralité de haut-parleurs (102) est agencé dans l'espace de bâtiment (200) à distance de la pluralité de luminaires (120).

**4.** Système (100) selon la revendication 1, dans lequel le dispositif de commande (106) est en outre configuré pour déterminer la matrice de réponse de canal de base (112) en :

activant chacun de la pluralité de microphones (104) pour capturer un ou plusieurs échantillons audio de base (122) ;
transmettant un signal de commande de ligne base (124) à chacun de la pluralité de haut-parleurs (102) tandis que l'espace de bâtiment (200) est en condition de base, dans lequel chacun des haut-parleurs (102) est configuré pour générer une pluralité de signaux audio de base (134) sur la base du signal de commande de base (124) ; et
calculant la matrice de réponse de canal de base (112) sur la base des signaux audio de base (134) et des échantillons audio de base (122).

**5.** Système (100) selon la revendication 1, dans lequel les haut-parleurs sélectionnés (116) sont configurés pour transmettre séquentiellement l'un de la pluralité de signaux audio (132).

**6.** Système (100) selon la revendication 1, dans lequel les haut-parleurs sélectionnés (116) sont configurés pour transmettre simultanément l'un de la pluralité de signaux audio (132).

7. Système (100) selon la revendication 6, dans lequel les signaux audio (132) transmis simultanément sont orthogonaux.

8. Système (100) selon la revendication 1, comprenant en outre une interface utilisateur (126) configurée pour recevoir une ou plusieurs sélections de zone de détection (128) provenant d'un utilisateur.

9. Système (100) selon la revendication 1, dans lequel chacun de la pluralité de haut-parleurs (102) est directionnel.

10. Système (100) selon la revendication 1, dans lequel chacun de la pluralité de microphones (104) est omnidirectionnel.

11. Système (100) selon la revendication 1, dans lequel chacun de la pluralité de signaux audio (132) a une fréquence supérieure ou égale à 16 kHz.

12. Système (100) selon la revendication 1, comprenant en outre un sous-système de mise en service (130) configuré pour associer une ou plusieurs parmi la pluralité de paires (206) à une ou plusieurs parmi la ou les zones de détection (204).

13. Procédé (500) pour évaluer une caractéristique d'une partie d'un espace de bâtiment, comprenant :

la sélection (502) d'une ou plusieurs parmi une ou plusieurs zones de détection, dans lequel la ou les zones de détection sont à l'intérieur de la partie de l'espace de bâtiment ;
l'activation (504) d'un ou plusieurs parmi une pluralité de microphones pour capturer un ou plusieurs échantillons audio, dans lequel chacun des microphones activés correspond à au moins l'une d'une pluralité de paires associées à une ou plusieurs parmi les zones de détection sélectionnées, dans lequel chaque paire comprend au moins l'un de la pluralité de microphones et au moins l'un d'une pluralité de haut-parleurs, et dans lequel chaque paire forme l'un d'une pluralité de canaux de transmission à trajets multiples audio ;
la sélection (506) d'un ou plusieurs parmi la pluralité de haut-parleurs sur la base d'une matrice de réponse de canal de base et des microphones activés, la matrice de réponse de canal de base représentant un canal de transmission audio entre le ou les microphones de la pluralité de microphones (104) et le ou les haut-parleurs de la pluralité de haut-parleurs (106) de la partie (202) de l'espace de bâtiment (200) ;
la transmission (508), par l'intermédiaire de chacun des haut-parleurs sélectionnés, de l'un d'une pluralité de signaux audio ;
la détermination (510) d'une matrice de réponse de canal de caractéristique sur la base des échantillons audio et des signaux audio ; et
l'évaluation (512) de la caractéristique de la partie de l'espace de bâtiment sur la base de la matrice de réponse de canal de caractéristique et de la matrice de réponse de canal de base.

14. Procédé (500) selon la revendication 13, comprenant en outre :

l'activation (514) de chacun de la pluralité de microphones pour capturer un ou plusieurs échantillons audio de base ;
la transmission (516), par l'intermédiaire de chacun de la pluralité de haut-parleurs, de l'un d'une pluralité de signaux audio de base tandis que l'espace de bâtiment est en condition de base ; et
le calcul (518) de la matrice de réponse de canal de base sur la base des signaux audio de base et des échantillons audio de base.

15. Procédé (500) selon la revendication 13, comprenant en outre l'association (520), par l'intermédiaire d'un sous-système de mise en service, d'une ou plusieurs parmi la pluralité de paires avec une ou plusieurs parmi la pluralité de zones de détection.

100  System

106  Controller

250  Memory

136  Characteristic

112  Baseline Channel Response Matrix

118  Characteristic Channel Response Matrix

300  Processor

275  Channel Matrix Algorithm

410  TxRx

114  Command Signals

124  Baseline Command Signals

400  Network

130  Commissioning Subsystem

450  TxRx

126  User Interface

128  Detection Area Selections

440  TxRx

120  Luminaire    430  TxRx

104  Microphone

108  Audio Samples

122  Baseline Audio Samples

102  Speaker    420  TxRx

132  Audio Signals

134  Baseline Audio Signals

Fig. 1

| 120a    Luminaire | | 120b    Luminaire | | 120c    Luminaire |
|---|---|---|---|---|
| 104a    Microphone | | 104b    Microphone | | 104c    Microphone |

110 Activated Microphones

208
AMTC

204e
Detection
Area

202 Portion of Building Space

204b
Detection
Area

204c
Detection
Area

204d
Detection
Area

102c
Speaker

204a
Detection
Area

116 Selected Speakers

102a
Speaker

102b
Speaker

204f
Detection
Area

Fig. 2

EP 4 111 146 B1

FIG. 3

Fig. 4

500

520 — associating, via a commissioning subsystem, one or more of the plurality of pairs with one or more the plurality of detection areas

514 — activating each of the plurality of microphones to capture one or more baseline audio samples

516 — transmitting, via each of the plurality of speakers, one of a plurality of baseline audio signals while the building space is in baseline condition

518 — calculating the baseline channel response matrix based on the baseline audio signals and the baseline audio samples

502 — selecting one or more of the one or more detection areas, wherein the one or more detection areas are within the portion of the room

504 — activating one or more of a plurality of microphones to capture one or more audio samples, wherein each of the activated microphones corresponds to at least one of a plurality of pairs associated with one or more of the selected detection areas, wherein each pair comprises at least one of the plurality of audio multipath transmission channels

506 — selecting one or more of the plurality of speakers based on a baseline channel response matrix and the activated microphones

508 — transmitting, via each of the selected speakers, one of a plurality of audio signals

510 — determining a characteristic channel response matrix based on the audio samples and the audio signals

512 — evaluating the characteristic of the portion of the room based on the characteristic channel response matrix and the baseline channel response matrix

Fig. 5

**EP 4 111 146 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2017299425 A1